# EUROPÄISCHE PATENTSCHRIFT

(11) **EP 0 156 301 B1**
(45) Veröffentlichungstag und Bekanntmachung des Hinweises auf die Patenterteilung: **27.01.1993**
(21) Anmeldenummer: 85103270.6
(22) Anmeldetag: 20.03.1985
(51) Int. Cl.: B60R 19/52

(54) **Frontschutzbügel für Kraftfahrzeuge**
Front hoop guard for motor vehicles
Garde-chape avant pour véhicules automobiles

(30) Priorität: 28.03.1984 DE 3411490
(43) Veröffentlichungstag der Anmeldung: 02.10.1985
(73) Patentinhaber: Rumpp, Gerhard, D-82266 Inning (DE)
(72) Erfinder: Rumpp, Gerhard, D-82266 Inning (DE)
(74) Vertreter: Grünecker, Kinkeldey, Stockmair & Schwanhäusser Anwaltssozietät

(56) Entgegenhaltungen:
- CH-A- 264 165
- DE-B- 1 126 263
- DE-U- 8 126 899
- US-A- 1 608 097
- US-A- 3 622 174
- US-A- 4 099 760

## Beschreibung

Die vorliegende Erfindung betrifft einen Frontschutzbügel für Kraftfahrzeuge, insbesondere Geländefahrzeuge, mit einem die Frontpartie des Fahrzeuges schützenden Rohrgestell und auf jeder Seite des Fahrzeugs mindestens einen an dem Fahrzeug angebrachten Träger des Frontschutzbügels.

Frontschutzbügel für Geländefahrzeuge dienen als Schutz der Frontpartie des Fahrzeuges gegen Äste, Felsvorsprünge usw. bei dessen Einsatz im Gelände.

Insbesondere bei rauhem Geländebetrieb sollen die Leuchten im Frontbereich sowie der Kühlergrill mit den Lufteintrittsöffnungen zum Motorraum wirkungsvoll geschützt werden. Derartige Frontschutzbügel sind bekanntlich mittels Schraubverbindungen fest mit dem Fahrzeug verbunden. Die Stoßkräfte, die auf den Frontschutzbügel wirken, werden direkt über die Schraubverbindungen auf die Stoßstange oder auf Teile des Fahrzeugrahmens übertragen.

Aus der DE-U1-8 126 899 ist ein heckseitiger Schutzbügel für Kraftfahrzeuge, insbesondere für Geländefahrzeuge, bekannt, mit einem die Heckpartie des Fahrzeuges schützenden Rohrgestell und auf jeder Seite des Fahrzeuges mindestens einem an dem Fahrzeug angebrachten Träger des Schutzbügels, wobei die Träger an am Fahrzeug befindlichen Halterungen durch Scharniere senkbar bzw. einsteckbar angeordnet sind, und der Schutzbügel auf beiden Seiten des Fahrzeuges über eine Verschlußvorrichtung mit dem Fahrzeug lösbar verbunden ist.

Die Verschlußverbindung, die im oberen Bereich des heckseitigen Schutzbügels angeordnet ist, wird von einem Haken und einem Rohrstutzen gebildet, der seinerseits in einer Hülse auf- und abbewegbar ist, so daß nach Eingreifen des Hakens in den Rohrstutzen durch Anhebung desselben die Verbindung wieder gelöst werden kann.

Weiterhin ist ein Gummipuffer vorgesehen, der in Anlage an den Schutzbügel, insbesondere an das querverlaufende obere Rohr in Anschlag kommt, um ein Gegenlager des Schutzbügels zu bilden und den Haken in Andruck an die Innenwand des Rohrstutzens unter Spannung zu bringen.

Der Aufbau dieser Verbindungseinrichtung weist jedoch einige Nachteile auf. So ist er zunächst beim Stand der Technik an der Heckseite des Kraftfahrzeuges angebracht, da er bei Anbringen an der Frontseite, insbesondere als Rammschutz, ungeeignet erscheint, insbesondere auch im Hinblick auf die Zuverlässigkeit der Verschlußeinrichtung, da durch eventuelle Schläge ein sicherer Verschlußeingriff nicht gewährleistet ist. Darüber hinaus kann durch starke Verschmutzungen das Lösen stark beeinträchtigt werden und können sich durch Verbiegungen des Schutzbügels bei entsprechender Beaufschlagung desselben Verbiegungen der Haken ergeben, die wiederum ein sicheres Funktionieren der Verschlußeinrichtung unterbinden.

Der vorliegenden Erfindung liegt deshalb die Aufgabe zugrunde, einen Frontschutzbügel für Kraftfahrzeuge zu schaffen, der leicht handhabbar, auf einfache Weise von dem Fahrzeug abnehmbar ist, und dessen Verbindungseinrichtung mit dem Fahrzeug eine sichere Funktionsweise ermöglicht.

Diese Aufgabe wird durch die kennzeichnenden Merkmale des Anspruchs 1 gelöst.

Diese Lösung ist einfach und kostengünstig. Sie hat den Vorteil, daß der Frontschutzbügel ebenso wie herkömmliche Frontschutzbügel fest mit dem Fahreug verbunden ist und somit einen wirkungsvollen Schutz im Gelände gewährleistet, daß er aber andererseits schnell von der Frontpartie des Fahrzeugs entfernt werden kann. Dadurch wird z.B. bei kleineren Reparaturen an der Frontpartie des Fahrzeugs ein schneller Zugang zu dieser erreicht. Dabei können die Bolzen der beiden Halterungen unterschiedlich lang ausgebildet sein, um so das Einfädeln beim anschließender Wiederanbringen des Frontschutzbügels zu erleichtern.

Um den Frontschutzbügel nicht immer vollständig abnehmen zu müssen, wenn man an die Frontpartie des Fahrzeugs will, ist es günstig, daß die am Fahrzeug befindlichen Halterungen als Scharnierhälften ausgebildet sind, wobei am Frontschutzbügel entsprechende Scharnierhälften angebracht sind, so daß der Frontschutzbügel in Fahrtrichtung schwenkbar ist.

Um die Streben auf einfache Weise vom Fahrzeug lösen zu können, ohne dabei irgendwelche Verbindungen unterhalt des Fahrzeugs lösen zu müssen, ist es vorteilhaft, daß eine aus einem Anschlußteil und einem Verbindungsteil bestehende, schnell lösbare Verbindungseinrichtung vorgesehen ist, deren Anschlußteil am Fahrzeugrahmen befestigt ist und deren Verbindungsteil mit einem Ende der Strebe verbunden ist. Um die Strebe mit einem Längenausgleich zu versehen, ist es günstig, daß an einem Ende der Strebe eine Gewindebohrung vorgesehen ist, in welche ein an einem Ende eines Zwischenstücks gegen Drehung gesichert befestigter Gewindezapfen einschraubbar ist, wobei am anderen Ende des Zwischenstücks das Verbindungsteil vorgesehen ist.

Zum Schutz des Längenausgleichs ist es vorteilhaft, daß an dem einen Ende der Strebe eine das der Strebe zugewandte Ende des Zwischenstücks überragende Muffe vorgesehen ist.

Eine schnell lösbare und einfach zu handhabende Verbindung zwischen dem Verbindungsteil an dem einen Ende der Strebe und dem am Fahrzeugrahmen befestigten Anschlußteil ergibt sich dadurch, daß das Verbindungsteil einen axial verschiebbaren, drehgesicherten Zapfen aufweist, der unter der Wirkung eines Tellerfederpaketes im ausgekoppelten Zustand der Verbindungseinrichtung nach innen in eine innere Endstellung, in der er um einen bestimmten Betrag das Verbindungsteil überragt, an einen Anschlag zur Anlage kommt, wobei das überragende Ende des Zapfens mit mindestens einem seitlichen Vorsprung versehen ist, und das Anschlußteil eine Ausnehmung für die Aufnahme des Zapfens und eine kreissegmentförmige, am Rand der Ausnehmung angeordnete Rampe aufweist, deren Gleitbahn von dem Zapfen abgewandt und mit mindestens einer dem Vorsprung entsprechenden Rastvertiefung versehen ist. Durch diese Ausgestaltung der Verbindungseinrichtung kann durch einfaches Drehen des Zwischenstücks um weniger als eine Drehung eine Strebe vom Fahrzeug gelöst oder wieder angebracht werden.

Um das Drehen des Zwischenstücks zu erleichtern, ist es von Vorteil, daß in dem Zwischenstück quer zu dessen Längsachse eine zylindrische Querhülse angeordnet ist, so daß in dieser Querhülse zum Drehen des Zwischenstücks ein Hebel angesetzt werden kann.

Dabei ist es vorteilhaft, daß die Querhülse im Inneren in der Mitte eine Verengung aufweist, damit der Hebel nicht zur anderen Seite der Querhülse hinausragt und beim Anbringen des Frontschutzbügels den Lack des Fahrzeugs verkratzt.

Will man den Frontschutzbügel nicht schwenkbar, aber dennoch schnell und einfach lösbar durch seitliches Verschieben quer zum Fahrzeug an diesem anbringen, ist es günstig, daß das Verbindungsteil zur Aufnahme des Zapfens und des Tellerfederpakets einen käfigartigen Kolben und mindestens einen auf der um ihre eigene Längsachse drehbare Querhülse angebrachten Exzenter umfaßt, mittels dem der Zapfen durch Verschieben des Kolbens in dem Zwischenstück versenkbar ist.

Die Streben können schwenkbar am Frontschutzbügel angebracht sein, um dabei das Wiederanbringen eines durch den Gebrauch leicht verzogenen Frontschutzbügel zu erleichtern. Um die Scheinwerfer des Fahrzeugs gegen Steinschalg usw. zu schützen, ist es vorteilhaft, wenn der Frontschutzbügel mit Lampenschutzgittern versehen ist.

Im folgenden wird ein Ausführungsbeispiel der Erfindung anhand von Zeichnungen näher erläutert.

Es zeigen
- Fig. 1: eine verkleinerte Seitenansicht des Frontschutzbügels mit Streben und Scharnieren,
- Fig. 2: eine Draufsicht auf ein Scharnier in Originalgröße,
- Fig. 3: eine vergrößerte Ansicht der Verbindungseinrichtung einer Strebe im Schnitt, und
- Fig. 4: eine vergrößerte Ansicht eines in dem Zwischenstück axial verschiebbaren Verbindungsteils.

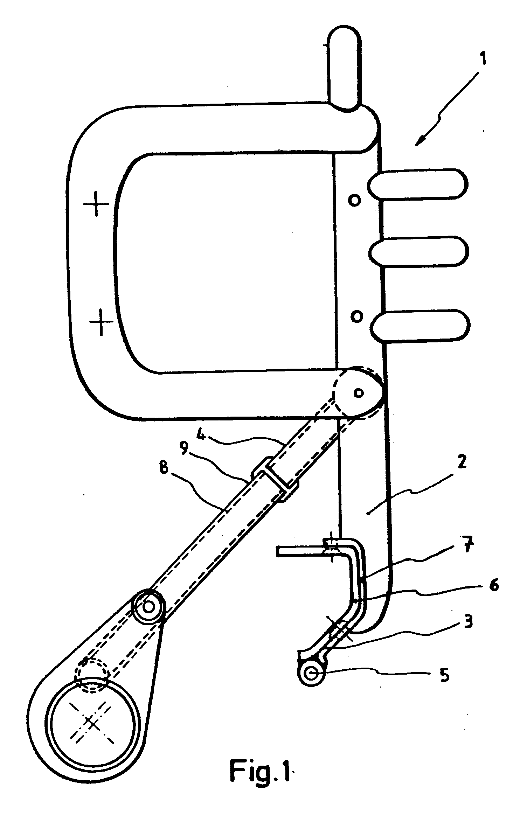

Wie am besten aus Fig. 1 ersichtlich, umfaßt der Frontschutzbügel 1 ein Rohrgestell mit an diesem angebrachten und mit Scharnieren 3 versehenen Trägern 2 sowie mit Zwischenstücken 9 und Anschlußteilen 8 versehene Streben 4.

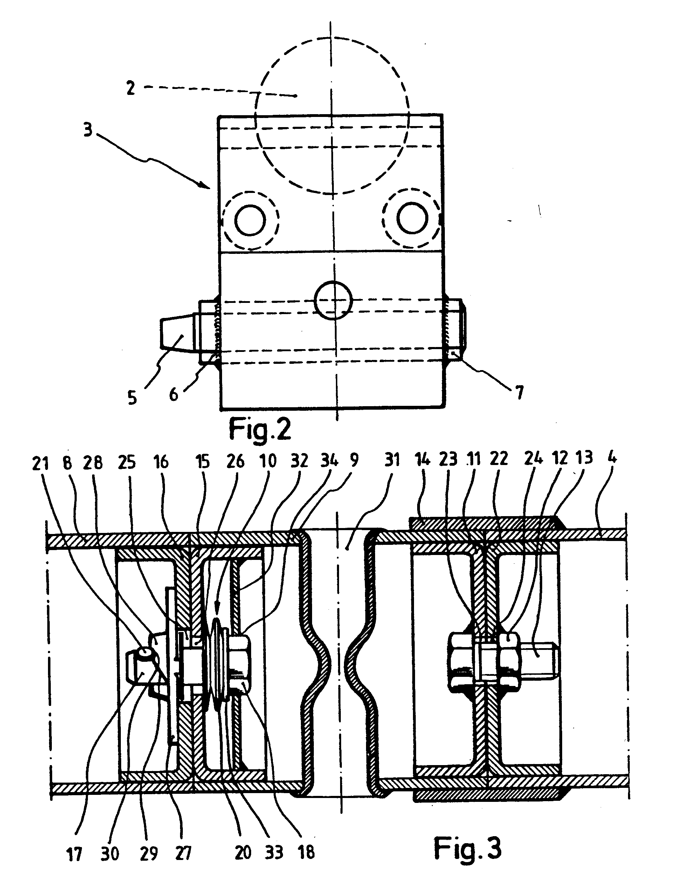

Ein Scharnier 3 besteht aus zwei Scharnierhälften 6 und 7, die mit je einer Hülse versehen sind. Die Scharnierhälften 6 und 7 sind auf einem Scharnierbolzen 5 gelagert (vgl. Figur 2). Der Scharnierbolzen 5 ist in die am Fahrzeug befestigte Scharnierhälfte 6 eingeschweißt. Die mit dem Träger 2 verschweißte Scharnierhälfte 7 ist auf das freie Ende des Scharnierbolzens 5 aufgesteckt. Die am Fahrzeug angeschraubte Scharnierhälfte 6 ist der Kontur des Fahrzeugs an der Anbringungsstelle (z.B. der Stoßstange) angepaßt. Die beiden Scharnierhälften 6 und 7 haben in etwa die gleiche Gestalt und liegen aufeinander.

Wie aus Figur 3, ersichtlich, umfaßt die Verbindungseinrichtung zwischen Strebe 4 und Fahrzeug ein Zwischenstück 9 mit einem Verbindungsteil 10 und ein Anschlußteil 8. Das Zwischenstück 9 ist an seinem der Strebe 4 zugewandten Ende mit einer Stirnplatte 11 versehen, deren Ränder umgebogen und mit dem Verbindungsstück verschweißt sind. Die Stirnplatte 11 hat in ihrer Mitte eine Ausnehmung 23, durch die eine Ausgleichsschraube 13 in Richtung der Strebe 4 durchgesteckt und mit ihrem Schraubenkopf an der Stirnplatte 11 verschweißt ist. Die Strebe 4 ist mit ihrem dem Zwischenstück 9 zugewandten Ende ebenfalls mit einer Stirnplatte 22 versehen. Diese Stirnplatte 22 weist in ihrer Mitte eine Ausnehmung 24 auf, über der eine im Innern der Strebe 4 angeordnete Ausgleichsmutter 12 derart an die Stirnplatte 22 angeschweißt ist, daß ihre Achse mit der Achse der Ausgleichsschraube 13 zusammenfällt. In zusammengebautem Zustand ist die Ausgleichsschraube 13 zumindest teilweise in die Ausgleichsmutter 12 eingeschraubt. Die Fuge zwischen der im Querschnitt kreisringförmigen Strebe 4 und dem ebenfalls im Querschnitt kreisringförmigen Zwischenstück 9 ist durch eine außen an dem dem Zwischenstück 9 zugewandten Ende angeschweißte im Querschnitt kreisringförmige Muffe 14 abgedeckt. An den gegenüberliegenden Ende des Zwischenstücks 9 befindet sich der Verbindungsteil 10. Er umfaßt eine in das Zwischenstück 9 eingeschweißte, mit dem Ende des Zwischenstücks 9 fluchtende Stirnplatte 15, die in ihrer Mitte mit einer kreisförmiger. Ausnehmung 26 versehen ist. In dieser Ausnehmung befindet sich ein mit seinen freien Ende über, das Zwischenstück 9 hinausragender Zapfen 17, der mit einem in dem Zwischenstück 9 befindlichen Sechskantkopf 18 versehen ist. Auf seiner dem freien Ende des Zapfens 17 zugewandten Seite ist der Sechskantkopf 18 mit einem Anschlag 33 versehen. Zwischen dem Anschlag 33 und der Stirnplatte 15 befindet sich ein Tellerfederpaket 20. Der Sechskantkopf 18 ist in einer sechskantförmigen Ausnehmung 34 einer mit den umgebogenen Rändern der Stirnplatte 15 verschweißten Platte 32 geführt und gegen Verdrehung gesichert. Das freie Ende des Zapfens 17 ist mit zwei sich gegenüberliegenden seitlichen Vorsprüngen 21 versehen, die quer zur Achse des Zapfens 17 angeordnet sind.

Das an seinem dem Zwischenstück 9 zugewandten Ende im Querschnitt kreisringförmig ausgebildete Anschlußteil 8 ist ebenfalls mit einer mit seinem Ende fluchtenden Stirnplatte 16 versehen, deren Ränder umgebogen und an der Innenseite des Anschlußteils 8 angeschweißt sind. Die Stirnplatte 16 weist in ihrer Mitte eine kreisförmige Ausnehmung 25 auf, deren Achse im zusammengebauten Zustand mit der Achse des Zapfens 17 übereinstimmt. Von der Innenseite des Anschlußteils 8 ist mittig über der Ausnehmung 25 eine Scheibe 27 an der Stirnplatte 16 angeschraubt oder-genietet. Die Scheibe 27 umfaßt zwei kreisringsegmentförmige Rampen 28, die ins Innere des Anschlußteiles 8 gerichtet sind und mit Laufbahnen 29 versehen sind, die am Ende ihres rampenförmigen Anstiegs zwei sich gegenüberliegende, den seitlichen Vorsprüngen 21 des Zapfens 17 entsprechende Rastvertiefungen 30 aufweisen. Eine Laufbahn 29 entspricht dabei in ihrer Länge einem Viertelkreis.

Das Zwischenstück 9 ist in der Mitte zwischen seinen beiden Enden mit einem quer zu seiner Längsachse im Innern angeordneten, die Wandung durchdringenden Querrohr 31 versehen, das in seiner Mitte eine Einschnürung aufweist.

Die Anbringung eines oben beschriebenen Frontschutzbügels 1 geschieht folgendermaßen. Zuerst werden die Anschlußteile 8 mit hier nicht dargestellten Verbindungselementen an dem Rahmen des Fahrzeugs angebracht. Das kann durch Anschrauben oder Anschweißen geschehen. Anschließend werden die mit den Scharnierbolzen 5 versehenen Scharnierhälften 6 an der Stoßstange des Fahrzeuges angeschraubt. Dann werden die Zwischenstücke 9 mit ihren mit der Ausgleichsschraube 13 versehenen Enden an die Streben 4 angeschraubt. Diese Verbindung dient dem Längenausgleich der Strebe 4. Die Ausgleichsschraube 13 muß deswegen nicht, wie in Figur 3 dargestellt, vollständig in die Ausgleichsmutter 12 eingeschraubt sein, es ist vielmehr möglich, daß zwischen der Strebe 4 und dem Zwischenstück 9 ein Spalt verbleibt. Nachdem die Zwischenstücke 9 an die Streben 4 angeschraubt sind, wird der Frontschutzbügel mit seinen an den Trägern 2 angeschweißten Scharnierhälften 7 auf die im hier gezeigten Fall unterschiedlich langen Scharnierbolzen 5 der an der Stoßstange des Fahrzeugs angeschraubten Scharnierhälften 6 derart aufgeschoben, daß zunächst die dem längeren Scharnierbolzen 5 zugewandte Scharnierhälfte 7 teilweise aufgesteckt wird, während dann anschließend die zweite Scharnierhälfte 7 auf den kürzeren Scharnierbolzen 5 aufgesteckt wird. Danach wird der Frontschutzbügel 1 mit beiden Scharnierhälften 7 bis zum Anschlag in die Scharnierhälften 6 eingeschoben. Nun kann der Frontschutzbügel 1 mit seinen Streben 4 an die Anschlußteile 8 angeklappt werden. Dabei greifen die mit den seitlichen Vorsprüngen 21 versehenen Zapfen 17 durch die Ausnehmungen 25 und die Scheiben 27 der Anschlußteile 8 hindurch. Der Zapfen 17 liegt zu dieser Zeit noch mit seinem Anschlag 33 an der Platte 32 an. Durch Verdrehen des Zwischenstücks 9 mit einer in die Querhülse 31 eingesteckten Hebel (z.B. ein Schraubendreher) um eine Vierteldrehung wird der Zapfen 17 mittels seiner an den Laufbahnen 29 hochsteigenden seitlichen Vorsprüngen entgegen der Wirkung des Tellerfederpaketes 20 in Richtung des Anschlußteils 8 gezogen, bis seine seitlichen Vorsprünge 21 in den Rastvertiefungen 30 einrasten.

Der Frontschutzbügel 1 ist nun am Fahrzeug angebracht. Das Abnehmen des Frontschutzbügels 1 erfolgt in umgekehrter Reihenfolge wie das Anbringen. Dabei verbleiben jedoch die Anschlußteile 8 sowie die Scharnierhälften 6 am Fahrzeug. Beim Wiederanbringen des Frontschutzbügels 1 ist dieser deshalb lediglich auf die Scharnierhälften 6 aufzuschieben und, wie oben beschrieben, mit seinen Streben 4 an den Anschlußteilen 8 zu befestigen.

Um ein beim Fahren evtl. auftretendes Klappern der Scharniere 3 zu beseitigen, löst man wieder die Verbindung zwischen dem Zwischenstück 9 und dem Anschlußteil 8 und schraubt das Zwischenstück 9 weiter in die Strebe 4 ein, so daß sich die wirksame Länge der Strebe verringert. Da die beiden Scharnierhälften 6 und 7 aufeinanderliegen, wird sich das Scharnier 3 bei dem anschließenden Wiederherstellen der Verbindung zwischen dem Anschlußteil 8 und dem Zwischenstück 9 verspannen, wodurch ein Klappern in den Scharnieren 3 vermieden wird.

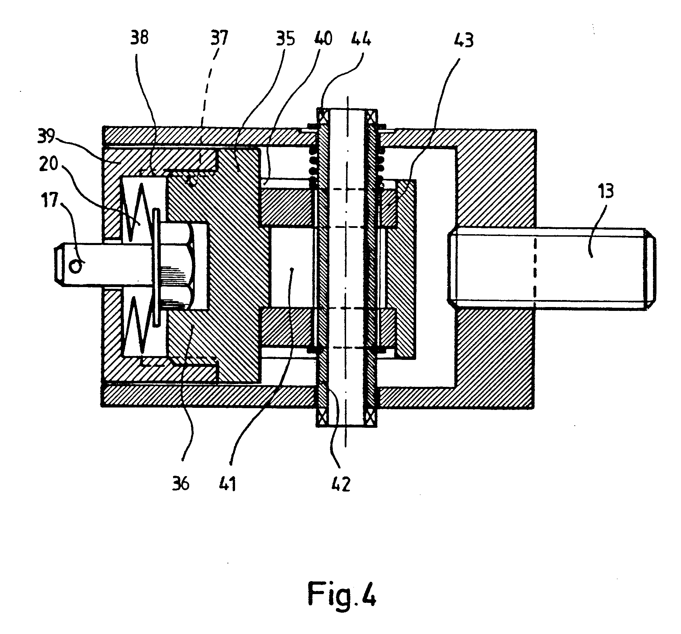

Anhand von Fig. 4 wird eine andere Ausführung eines Zwischenstücks 9 mit axial verschiebbarem Verbindungsteil 10 beschrieben. Für Bauteile, die mit den vorherbeschriebenen Bauteilen gleich oder gleichartig sind, werden identische Bezugszeichen verwendet. Soweit nicht anders beschrieben, wirken die identisch bezeichneten Bauteile wie bei der vorerwähnten Ausführungsform. Das Verbindungsteil 10 umfaßt einen axial in dem Zwischenstück 9 hin- und herbewegbaren Kolben 35, an dessen einem Ende eine sechskantförmige Ausnehmung 34 zur Aufnahme des Sechskantkopfs 18 des Zapfen 17 und an dem die Ausnehmung 34 umgebenden Sockel 36 ein Außengewinde 37 vorgesehen ist. Zum Abstützen des Tellerfederpaketes 20 ist eine mit einem Innengewinde 38 versehene Stirnkappe 39 an dem Außengewinde 37 des Kolbens 35 angeschraubt. Die Stirnkappe 39 hat eine kreisförmige Ausnehmung 26, durch die der Zapfen 17 hindurchragt.

An dem der Ausgleichsschraube 13 zugewandten Teil des Kolbens 35 befinden sich quer zu seiner Achse zwei sich achsensymmetrisch gegenüberliegende kreisförmige Vertiefungen 40. Zwischen diesen beiden kreisförmigen Vertiefungen 40 ist der Kolben 35 ebenfalls mit einem kreisförmigen, im Durchmesser jedoch kleineren Durchbruch 41 versehen. Quer zur Längsachse des Zwischenstücks 9 ist durch den kreisförmigen Durchbruch 41 des Kolbens 35 eine Querhülse 42 durchgeführt. Auf der Querhülse 42 sitzen exzentrisch angeordnet zwei Kreisscheiben 43, die mit ihrem äußeren Rand in den kreisförmigen Vertiefungen 40 liegen. Die Querhülse 42 ist in dem Teil, auf dem die Kreisscheiben 43 sitzen, ebenso wie diese selber mit einer Keilverzahnung versehen, so daß die Kreisscheiben 43 formschlüssig mit der Hülse 42 verbunden sind. Die Querhülse 42 ist um ihre Längsachse drehbar in dem Zwischenstück 9 gelagert und mit Sicherungsringen axial fixiert. Die Kreisscheiben 43 werden auf der Querhülse 42 durch Sicherungsringe bzw. durch eine Schraubenfeder zwischen der Innenseite des Zwischenstücks 9 und einer Kreisscheibe 43 in den kreisförmigen Vertiefungen 40 gehalten. Die Querhülse 42 ist an ihren seitlich über das Zwischenstück 9 hinausragenden Enden mit Schlitzen 44 zur Aufnahme eines die Querhülse 42 um ihre eigene Achse drehenden Werkzeuges versehen. Anstelle der Schlitze ist es auch möglich, z.B. einen Innensechskant in der Querhülse 42 vorzusehen.

Im folgenden wird die Anbringung eines Frontschutzbügels mit einer Verbindungseinrichtung nach der zweiten Ausführungsform beschrieben, soweit sie sich von der vorher erwähnten Anbringung unterscheidet. Die Träger 2 des Frontschutzbügels 1 müssen nun nicht mehr schwenkbar in Scharnieren 3 am Fahrzeug angebracht sein, es reicht vielmehr, wenn am Fahrzeug Halterungen 3 angeordnet sind, die z.B.ein seitliches Einschieben, aber keine Schwenkbewegung ermöglichen. Bei Verwendung dieser Halterungen wird der Zapfen 17 des Verbindungsteils 10 des an der Strebe 4 angebrachten Zwischenstücks 9 durch Drehen der Querhülse 42 um ihre eigene Achse so weit in das Zwischenstück 9 eingezogen, daß sein Ende bündig mit dem freien Ende des Zwischenstücks 9 abschließt. Um dies zu erreichen, ist der Exzenterradius der Kreisscheibe 43 halb so groß gewählt wie das maximale Überstehen des Zapfens 17 über das Ende des Zwischenstücks 9 hinaus.

Das Einziehen des Zapfens 17 durch das Drehen der Querhülse 42 um ihre eigene Achse geschieht dadurch, daß sich der Kolben 35 durch Drehen der exzentrischen Kreisscheiben 43 längs seiner Achse in das Innere des Zwischenstücks 9 bewegt. Mit dem Kolben 35 bewegt sich auch die an diesem angeschraubte Stirnkappe 39 in die gleiche Richtung. Da sich der Zapfen 17 über das Tellerfederpaket 20 an der Stirnkappe 39 abstützt, wird dieser ebenfalls mitbewegt.

Nachdem an beiden Zwischenstücken 9 die Zapfen 17 eingezogen sind, kann der Frontschutzbügel 1 seitlich auf die Halterungen 3 aufgeschoben werden. Sobald die Zwischenstücke 9 mit den Anschlußteilen 8 fluchten, kann durch weiteres Drehen der Querhülse 42 der Kolben 35 samt Zapfen 17 wieder ausgefahren werden. Das Ende des Zapfens 17 ragt nun in das Anschlußteil 8. Durch Drehen des Zwischenstücks 9 um seine eigene Achse wird nun wie in oben geschriebener Weise die Verbindung zwischen der Strebe 4 und dem Anschlußteil 8 hergestellt.

Das Abbauen des Frontschutzbügels 1 geschieht in der umgekehrten Reihenfolge.

Das Zwischenstück 9 sowie die Verbindungseinrichtungen können als Tiefziehteile aus Blech oder aber auch als Drehteile hergestellt sein.

## Patentansprüche

1. Frontschutzbügel (1) für Kraftfahrzeuge, insbesondere Geländefahrzeuge, mit einem die Frontpartie des Fahrzeuges schützenden Rohrgestell und auf jeder Seite des Fahrzeuges mindestens einem an dem Fahrzeug angebrachten Träger (2) des Frontschutzbügels (1), wobei die Träger (2) an am Fahrzeug befindlichen Halterungen (3) einsteckbar angeordnet sind und eine aus einem Anschlußteil (8) und einem Verbindungsteil (10) bestehende, schnell lösbare Verbindungseinrichtung vorgesehen ist, deren Anschlußteil (8) am Fahrzeugrahmen befestigt ist,
**dadurch gekennzeichnet,**
daß der Frontschutzbügel (1) auf beiden Seiten des Fahrzeuges mit diesem über je eine Strebe (4) lösbar verbindbar ist, und das Verbindungsteil (10) mit einem Ende der Strebe (4) verbunden ist.

2. Frontschutzbügel nach Anspruch 1,
**dadurch gekennzeichnet,** daß an einem Ende der Strebe (4) eine Gewindebohrung (12) vorgesehen ist, in welche ein an einem Ende eines Zwischenstücks (9) gegen Drehung gesichert befestigter Gewindezapfen (13) einschraubbar ist, wobei am anderen Ende des Zwischenstücks (9) das Verbindungsteil (10) vorgesehen ist.

3. Frontschutzbügel nach Anspruch 2,
**dadurch gekennzeichnet,** daß an dem einen Ende der Strebe (4) eine das der Strebe (4) zugewandte Ende des Zwischenstücks (9) überragende Muffe (14) vorgesehen ist.

4. Frontschutzbügel nach einem der Ansprüche 1 bis 3,
**dadurch gekennzeichnet,** daß das Verbindungsteil (10) einen axial verschiebbaren, drehgesicherten Zapfen (17) aufweist, der unter der Wirkung eines Tellerfederpakets (20) im ausgekoppelten Zustand der Verbindungseinrichtung nach innen in eine innere Endstellung, in der er um einen bestimmten Betrag das Zwischenstück (9) überragt, an einem Anschlag (33) zur Anlage kommt, wobei das überragende Ende des Zapfens (17) mit mindestens einem seitlichen Vorsprung (21) versehen ist, und das Anschlußteil (8) eine Ausnehmung (25) für die Aufnahme des Zapfens und eine kreisringsegmentförmige, am Rand der Ausnehmung (25) angeordnete Rampe (28) aufweist, deren Gleitbahn (29) von dem Zapfen (17) abgewandt und mit mindestens einer dem Vorsprung (21) entsprechenden Rastvertiefung (30) versehen ist.

5. Frontschutzbügel nach einem der Ansprüche 2 bis 4,
**dadurch gekennzeichnet,** daß in dem Zwischenstück (9) quer zu dessen Längsachse eine zylindrische Querhülse (31, 42) angeordnet ist.

6. Frontschutzbügel nach Anspruch 5,
**dadurch gekennzeichnet,** daß die Querhülse (31) im Inneren in ihrer Mitte eine Verengung aufweist.

7. Frontschutzbügel nach einem der Ansprüche 1 bis 6,
**dadurch gekennzeichnet,** daß das Verbindungsteil (10) zur Aufnahme des Zapfens (17) und des Tellerfederpakets (20) einen käfigartigen Kolben (35) und mindestens einen auf der um ihre eigene Längsachse drehbaren Querhülse (42) angebrachten Exzenter (43) umfaßt, mittels dem der Zapfen (17) durch Verschieben des Kolbens (35) in dem Zwischenstück (9) versenkbar ist.

8. Frontschutzbügel, nach einem der Ansprüche 1 bis 7,
**dadurch gekennzeichnet,** daß die am Fahrzeug befindlichen Halterungen (3) als Scharnierhälften (6) ausgebildet sind, wobei am Frontschutzbügel (1) entsprechende Scharnierhälften (7) angebracht sind, so daß der Frontschutzbügel (1) in Fahrtrichtung schwenkbar ist.

9. Frontschutzbügel nach einem der Ansprüche 1 bis 8,
**dadurch gekennzeichnet,** daß die Streben (4) schwenkbar am Frontschutzbügel (1) angebracht sind.

10. Frontschutzbügel nach einem der Ansprüche 1 bis 9,
**dadurch gekennzeichnet,** daß der Frontschutzbügel (1) mit Lampenschutzgittern versehen ist.

## Claims

1. Front hoop guard (1) for motor vehicles, in particular cross-country vehicles, having a tubular frame protecting the front section of the vehicle and, on each side of the vehicle, at least one bracket (2), fitted to the vehicle, of the front hoop guard (1), the brackets (2) being insertably disposed on mountings (3) located on the vehicle and a rapidly detachable connecting device being provided, comprising an attachment part (8) and a connecting part (10), the attachment part (8) of which is fastened to the vehicle frame, characterised in that the front hoop guard (1) can be detachably connected to the vehicle, on both sides of it respectively, by a strut (4) and the connecting part (10) is connected to one end of the strut (4).

2. Front hoop guard according to Claim 1, characterised in that at one end of the strut (4) there is provided a threaded bore (12), into which a threaded journal (13), fastened in a rotation-secured manner to one end of an intermediate piece (9), can be screwed, the connecting part (10) being provided at the other end of the intermediate piece (9).

3. Front hoop guard according to Claim 2, characterised in that at the one end of the strut (4) there is provided a socket (14) which protrudes beyond the end of the intermediate piece (9) facing the strut (4).

4. Front hoop guard according to one of Claims 1 to 3, characterised in that the connecting part (10) exhibits an axially displaceable, rotationally-secured journal (17), which, under the action of a cup spring assembly (20), in the decoupled state of the connecting device, inwardly into an inner end position, in which it protrudes by a certain amount beyond the intermediate piece (9), comes to bear against a stop (33), the protruding end of the journal (17) being provided with at least one lateral projection (21), and the attachment part (8) exhibits a recess (25) for receiving the journal and a ring segment-shaped ramp (28), which is disposed on the rim of the recess (25) and the slideway (29) of which faces away from the journal (17) and is provided with at least one latch-locking indentation (30) corresponding to the projection (21).

5. Front hoop guard according to one of Claims 2 to 4, characterised in that a cylindrical cross-sleeve (31, 42) is disposed in the intermediate piece (9), transversely to its longitudinal axis.

6. Front hoop guard according to Claim 5, characterised in that the cross-sleeve (31) exhibits a constriction internally at its centre.

7. Front hoop guard according to one of Claims 1 to 6, characterised in that the connecting part (10), for the reception of the journal (17) and of the cup spring assembly (20), comprises a cage-like piston (35) and at least one eccentric (43), which eccentric is fitted on the cross-sleeve (42), the latter being rotatable about its own longitudinal axis, and by means of which eccentric the journal (17) can be lowered by displacement of the piston (35) in the intermediate piece (9).

8. Front hoop guard according to one of Claims 1 to 7, characterised in that the mountings (3) located on the vehicle are configured as hinge-halves (6), corresponding hinge-halves (7) being fitted to the front hoop guard (1), so that the front hoop guard (1) is pivotable in the direction of travel.

9. Front hoop guard according to one of Claims 1 to 8, characterised in that the struts (4) are fitted pivotably to the front hoop guard (1).

10. Front hoop guard according to one of Claims 1 to 9, characterised in that the front hoop guard (1) is provided with lamp protection grilles.

## Revendications

1. Étrier avant de protection (1) pour véhicules à moteur, en particulier pour véhicules tout-terrain, comprenant un châssis tubulaire protégeant la partie avant du véhicule ainsi que, de chaque côté du véhicule, au moins un support (2), monté sur le véhicule, de l'étrier avant de protection (1), les supports (2) étant disposés de façon à pouvoir être enfichés sur des fixation (3) se trouvant sur le véhicule, où est prévu un dispositif de liaison à démontage rapide, composé d'une partie de raccordement (8) et d'une partie de jonction (10), dont la partie de raccordement (8) est fixée sur le cadre de véhicule, caractérisé en ce que l'étrier avant de protection (1) est susceptible d'être relié, de manière amovible, au véhicule, des deux côtés de ce dernier, par l'intermédiaire chaque fois d'une jambe (4), et la partie de jonction (10) est reliée à une extrémité de la jambe (4).

2. Étrier avant de protection selon la revendication 1, caractérisé en ce que sur l'une des extrémités de la jambe (4) est prévue un alésage taraudé (12), dans lequel est susceptible de se visser une goupille filetée (13) bloquée en rotation sur une extrémité d'une pièce intermédiaire (9), la partie de jonction (10) étant prévue sur l'autre extrémité de la pièce intermédiaire (9).

3. Étrier avant de protection selon la revendication 2, caractérisé en ce qu'un manchon (14) dépassant l'extrémité, tournée vers la jambe (4), de la pièce intermédiaire (9) est prévu sur l'une des extrémité de la jambe (4).

4. Étrier avant de protection selon l'une des revendications 1 à 3, caractérisé en ce que la pièce de jonction (10) présente un tourillon (17) déplaçable axialement et assujetti en rotation, qui, sous l'action d'un ensemble de rondelles-ressort (20) et lorsque le dispositif de liaison est à l'état désaccouplé, se déplace vers l'intérieur, en une position finale interne, dans laquelle il dépasse d'une valeur prédéterminée de la pièce intermédiaire (9), vient en appui contre une butée (33), l'extrémité, qui dépasse, du tourillon (17) étant pourvue d'au moins une saillie latérale (21) et la partie de raccordement (8) présentant un évidement (25) pour recevoir le tourillon et une rampe (28) en forme d'anneau de cercle, disposée au bord de l'évidement (25), dont la surface de glissement (29) est opposée au tourillon (17) et munie d'au moins une encoche d'encliquetage (30) correspondant à la saillie (21).

5. Étrier avant de protection selon l'une des revendications 2 à 4, caractérisé en ce qu'une douille transversale (31,42) cylindrique est disposée dans la pièce intermédiaire (9), transversalement par rapport à son axe longitudinal.

6. Étrier avant de protection selon la revendication 5, caractérisé en ce que la douille transversale (31) présente un étranglement à l'intérieur et au milieu.

7. Étrier avant de protection selon l'une des revendications 1 à 6, caractérisé en ce que la pièce de jonction (10) comprend, pour recevoir le tourillon (17) et le paquet de rondelles-ressort (20), un piston en forme de cage (35) et au moins un excentrique (43), monté sur la douille transversale (42) susceptible de tourner autour de son axe longitudinal propre, au moyen duquel le tourillon (17) est susceptible de s'enfoncer dans la pièce intermédiaire (9), par déplacement du piston (35).

8. Ètrier avant de protection selon l'une des revendications 1 à 7, caractérisé en ce que les fixations (3) se trouvant sur le véhicule sont réalisées sous forme de moitiés de charnière (6), des moitiés de charnière (7) correspondantes étant montées sur l'étrier avant de protection (1), de telle façon que l'étrier avant de protection (1) soit susceptible de pivoter dans la direction du déplacement.

9. Étrier avant de protection selon l'une des revendications 1 à 8, caractérisé en ce que les jambes (4) sont montées pivotantes sur l'étrier avant de protection (1).

10. Étrier avant de protection selon l'une des revendications 1 à 9, caractérisé en ce que l'étrier avant de protection (1) est muni de grilles de protection pour les phares.
